# EUROPEAN PATENT SPECIFICATION

(11) **EP 3 983 286 B1**
(45) Date of publication and mention of the grant of the patent: **21.12.2022**
(21) Application number: 20808506.8
(22) Date of filing: 21.10.2020
(51) Int. Cl.: B62K 3/00, B62K 25/04, B60G 15/06, B60G 17/027, F16F 13/00, F16F 9/56, B60G 17/02, F16F 1/12, F16F 9/06

(54) **SHOCK ABSORBER ASSEMBLY WITH ADJUSTABLE HEIGHT**
STOSSDÄMPFERANORDNUNG MIT EINSTELLBARER HÖHE
ENSEMBLE AMORTISSEUR DE CHOCS À HAUTEUR RÉGLABLE

(30) Priority: 21.10.2019 IT 201900019439
(43) Date of publication of application: 20.04.2022
(73) Proprietor: VRM S.P.A., 40069 Zola Predosa (BO) (IT)
(72) Inventor: LUSSO, Niko, 40069 Zola Predosa (Bologna) (IT); MONTENEGRO, Marco, 40069 Zola Predosa (Bologna) (IT)
(74) Representative: Fuochi, Riccardo
(86) International application number: PCT/IB2020/059899
(87) International publication number: WO 2021/079288

(56) References cited:
- EP-A1- 3 225 527
- DE-A1-102014 207 055
- US-A- 5 181 696
- US-A1- 2014 077 465

## Description

### TECHNICAL FIELD OF THE INVENTION

The present invention refers to a shock absorber assembly with adjustable height, in particular a shock absorber assembly that allows a quick lowering of the vehicle, usable in the field of two-wheeled motor vehicles and the like, i.e. sidecars or lightweight vehicles with three or four wheels of the leaning type in corners, although more generally it may refer to motor vehicles of any type equipped with height-adjustable suspension.

### DESCRIPTION OF THE PRIOR ART

In the field of two-wheeled motor vehicles and the like, the need to adjust the height of the seat according to the condition of use as well as the load condition is increasingly felt. Some of the current two-wheeled motor vehicles, for example motorcycles in the enduro segment or the so-called crossover vehicles, need a rather high stance to cope with the off-road use of the vehicle, but at the same time, this is in contrast with the need to be able to handle the vehicle easily in all low-speed situations where the driver's feet need to be rested on the ground.

To respond to these needs, the latest generation motorcycles in the enduro/crossover segment are almost all equipped with suspension adjustment devices to compensate for the on-board load and allow a personalized adjustment of the seat height.

Suspension adjustment is therefore used in a more or less dynamic way, depending on the level of complexity of the control system present on the vehicle.

In known types of electro-hydraulically operated adjustment devices, in order to obtain faster suspension adjustment times it is necessary to increase the power of the drive motor of the hydraulic pump, however, this is in contrast with the electric power limit available on a two-wheeled vehicle or the like, for example a motorcycle.

Due to this power requirement, it follows that the speed of actuation of the seat raising system is strictly limited by the electric power of the vehicle and similarly, also the speed during lowering is limited.

Documents EP3024675A1 and WO 2008/038321 A1 describe height adjustable shock absorbers which use an electro-hydraulic device comprising a pusher unit which acts on the spring, increasing or decreasing the spring preload of the shock absorber and consequently varying the height of the vehicle on which the shock absorber is mounted, or the pusher unit acts on one end of the shock absorber near one of the shock absorber couplings to the vehicle, directly increasing or decreasing the length of the shock absorber, and an electrically motorized hydraulic pump is also provided which feeds oil under pressure to the pusher unit.

In the device illustrated in EP3024675A1, the pusher unit is single-acting and the hydraulic pump can be of the double-acting or single-acting type, while in the device illustrated in WO 2008/038321 A1, the pusher unit is double-acting and for oil delivery, a pressurized oil accumulator is provided which is filled at regular intervals by means of a single-acting pump, taking oil from a low pressure tank.

The type of devices described above, in addition to being relatively complex, is unable, in particular, to achieve a quick lowering of the vehicle, due to the limited electrical power of the pump motor and/or of the hydraulic components used.

In fact, in the case of the double-acting hydraulic pump, the electric power of the motor that drives the pump is not high enough to allow for quick movement of the pusher unit and, in the case of the single-acting hydraulic pump, the two-way and two positions solenoid valve, when used for draining the oil from the pusher unit, has relatively small oil ports, not allowing large oil flow rates and practically creating in actual fact a bottleneck choking the oil flow.

It should be considered that the ideal option would be to have, especially during lowering, a full displacement time of the pusher assembly measurable in tenths of a second, while with the devices mentioned here above, the displacement time of the pusher assembly is around ten seconds.

Documents US5181696A, US2014/0077465A1 and EP3225527A1 describe height-adjustable shock absorbers that use pumping elements provided in the suspension itself to obtain the pressurised fluid used for vehicle height adjustment. Document US5181696A discloses the preamble of claims 1 and 9.

To achieve the pressure in the fluid that is needed for vehicle height adjustment, it is therefore necessary for the suspension of the vehicle to perform a certain number of oscillations, and consequently, height adjustment is not immediate and may even require a relatively long time.

Document DE102014207055A1 describes a suspension system for a vehicle comprising a mechanical spring and a hydropneumatic spring which has a hydraulic volume that can be adjusted by means of a pneumatic container element; in order to lower the suspension, the volume of the hydropneumatic spring is emptied by means of a choked valve: this results in a rather long volume emptying time of the hydropneumatic spring and therefore, also an equally long suspension lowering time.

### OBJECTS OF THE INVENTION

The technical scope of the present invention is to improve the state of the art in the field of height adjustable shock absorbers.

Another object of the present invention is to make a shock absorber assembly available with adjustable height which has shorter vehicle lowering times than the known solutions. A further object of the present invention is to make a shock absorber assembly available with adjustable height which can be easily installed with little space available on board as is the case, in particular, with two-wheeled motor vehicles and the like.

Yet another object of the present invention is to provide a height adjustable shock absorber assembly which is made with components that are lightweight and low cost to manufacture.

Another object of the present invention is to provide a height-adjustable shock absorber assembly which requires low electrical power to be operated in the lowering phase. According to an aspect of the present invention, a shock absorber assembly with adjustable height according to claim 1 is proposed.

According to another aspect of the present invention, a kit for updating or retrofitting a shock absorber with adjustable height according to claim 8 is proposed.

According to yet another aspect of the present invention, a method for operating a shock absorber with adjustable height according to claim 9 is proposed.

Dependent claims refer to preferred and advantageous embodiments of the invention.

### BRIEF DESCRIPTION OF DRAWINGS.

Further aspects and advantages of the present invention will become clearer from the following detailed description of some examples of its embodiment, illustrated as an example only and not by way of limitation in the accompanying drawings, in which:
figure 1 is a schematic front view of a shock absorber assembly with adjustable height according to the present invention;
figure 2 is a cross-section view of some details of the shock absorber assembly with adjustable height referred to in figure 1;
figure 3 is a cross-section view of another detail of the shock absorber assembly with adjustable height referred to in figure 1;
figure 4 is a schematic front view of another version of a shock absorber assembly with adjustable height according to the present invention; and
figure 5 is a schematic front view of a further version of a shock absorber assembly with adjustable height according to the present invention.

### EMBODIMENTS OF THE INVENTION.

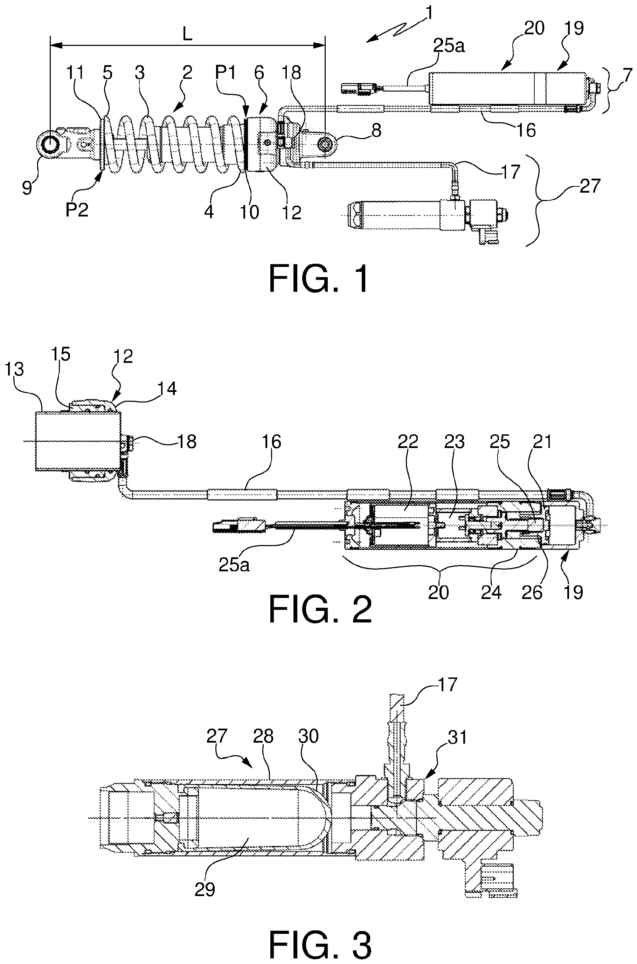

With reference to a version of the present invention, figure 1 illustrates a shock absorber assembly with adjustable height indicated as a whole with 1, which can be installed in a two-wheeled vehicle (not shown), or a sidecar or a three or four-wheeled lightweight vehicle of the leaning type in corners.

The shock absorber assembly with adjustable height 1, in the version illustrated in figure 1, essentially comprises a shock absorber 2 with at least one spring 3, e.g. a helical spring coaxial with the shock absorber 2, the spring 3 having a first end 4 and a second end 5 , at least one hydraulic fluid type pusher 6 also coaxial with the shock absorber 2 and installed in series with the spring 3, the pusher 6 acting on either one of the two ends 4, 5 of the spring 3 and a source 7 of pressurised hydraulic fluid to actuate the pusher 6.

It should be noted that the shock absorber assembly with adjustable height according to the present invention can also be applied to different types of suspension, for example to a telescopic fork for a motorcycle, in which case, the pusher can be installed in series with each spring inside the fork sliders, but it need not always be coaxial to the shock absorber, so it can also be configured as an actuator comprising a standard hydraulic cylinder, i.e. non-annular, single-acting.

The shock absorber 2 has a nominal length L and comprises at least two couplings 8, 9 operatively connected to the vehicle suspension.

The shock absorber 2 also has a first support base 10 located in a first support position P1 and a second support base 11 located in a second support position P2; the spring 3 has the first end 4 resting in the first position P1 on the first support base 10 of the shock absorber 2 and the second end 5 resting in the second position P2 on the second support base 11 of the shock absorber 2.

The pusher 6 can modify the supporting position P1 or P2 of one of the ends 4 or 5 of the spring 3; in particular in the version of figure 1, the pusher assembly 6 is positioned in contact with and acts on the first end 4 of the spring 3, changing the first supporting position P1 of the first end 4 of the spring 3.

It should be noted that alternatively, the pusher 6 could be in contact and act on the second end 5 of the spring 3 by changing the second position P2 of the second end 5 of the spring 3; possibly two pushers 6 could be provided to vary both supporting positions P1, P2 of the spring 3.

By changing the supporting position P1, or the supporting position P2, or both supporting positions P1, P2, the preload of spring 3 is changed: the initial preload can be increased or the initial preload can be decreased or cancelled.

Consequently, the height of the shock absorber group 1, and more generally the height of the vehicle, on which the aforementioned group 1 is mounted, can be changed: by increasing the preload of the spring 3, the height of the vehicle practically increases because the sinking of the suspension under load due to the vehicle's own weight and to loads applied to the vehicle decreases, by decreasing (or cancelling) the preload of the spring 3, the height of the vehicle practically decreases because the sinking of the suspension under load increases.

The pusher 6 comprises a hydraulic actuator driven by means of the source 7 of pressurised hydraulic fluid; in figures 1 and 2 the hydraulic actuator is configured as an annular cylinder 12 installed in series with the spring 3.

The assembly including the spring 3 and the cylinder 12 can replace the plain spring of a shock absorber with no adjustment, therefore the shock absorber assembly 1 according to the present invention can also be considered or sold as an upgrade or retrofit of existing shock absorbers without height adjustment.

Also in the case of a telescopic fork for motorcycles, the spring and pusher assembly according to the present invention can replace the plain spring provided in each slider of a pre-existing fork and therefore constitute an update or retrofit of a pre-existing telescopic fork.

Clearly, the shock absorber assembly with adjustable height according to the present invention can also be used as original equipment in newly produced vehicles.

Figure 2 illustrates, in section, the cylinder 12 which comprises a sleeve 13, a hollow portion 14 fixed to the sleeve 13 and a piston 15 sliding in a sealed manner within the hollow portion 14; the cylinder 12 can therefore be inserted on an pre-existing shock absorber by replacing a portion of the preceding spring, the sleeve 13 must have an inside diameter corresponding to the outside diameter of the pre-existing shock absorber.

The source 7 of pressurised hydraulic fluid is connected directly to the pusher 6, without intermediate valves, by means of a pipe 16.

The pipe 16 in turn communicates in a fluid manner with the cylinder 12 of the pusher 6; to this end, the pipe 16 is fixed to a hydraulic connection 18 communicating with the internal chamber of the cylinder 12.

It should be noted that, thanks to the direct connection between the source 7 of pressurised hydraulic fluid and the pusher 6, the shock absorber assembly 1 according to the present invention is simpler, lighter, cheaper and more reliable than known solutions which comprise one or more solenoid valves.

As indicated above, the cylinder 12 is a single-acting cylinder which is actively actuated by the hydraulic fluid only to increase the preload of the spring 3; in the event that the preload of the spring 3 must be reduced or cancelled when the vehicle is lowered, it is the same spring 3 which causes the hydraulic fluid to be emptied from the internal chamber of the cylinder 12 by pushing on piston 15 of the cylinder itself.

Since the cylinder 12 is of the single-acting type, the constructive form of the cylinder 12 is particularly simple, lightweight, reliable and low cost to produce.

The source 7 of hydraulic fluid comprises a hydraulic pump 19 powered by an electric motor unit 20.

The hydraulic pump 19 comprises a single-acting hydraulic cylinder (see figure 2) with a piston 21 sliding in a sealed manner within said hydraulic cylinder and operated in a linear manner in both directions within the stroke limits of the same piston 21, by means of the electric motor assembly 20.

The hydraulic pump 19 thus implemented is therefore simple, light, reliable and cheap to build.

According to what is illustrated in figure 2, the aforementioned motor assembly 20 comprises an electric motor 22 of the rotary type, a possible reduction unit 23, for example a planetary gear reduction unit, and a mechanism 24 for converting the rotary motion of the electric motor 22 into linear motion, the linear movement then causes the piston 21 to move, and an electrical connection 25 is also provided for the electric motor 22.

The aforesaid constructive form with an electric motor 22 of the rotary type, a possible reduction unit 23, for example a planetary gear reduction unit, and a mechanism 24 for converting the rotary motion of the electric motor 22 into linear motion, allows, power being equal, to use a small and lightweight electric motor and to obtain limited footprint. The mechanism 24 for converting rotary motion into linear motion can be implemented in different ways, for example: a toothed wheel that engages on a rack, a thrust crank mechanism, a cam and a follower, and in particular, a mechanism formed by a screw 25 and a nut screw 26 in operative connection to each other.

As illustrated in figure 2, it can be noted that the screw 25 is connected to the electric motor 22, while the nut screw 26 is connected to the piston 21, even if of course, these elements 25, 26 could be mutually exchanged.

A direct connection is thus implemented between the pump 19 and the cylinder 12 of the hydraulic type, similar to the hydraulic actuation devices of the brakes or the clutch of a motor vehicle.

In this way, it is possible to position the output of the piston 21 of the cylinder 12 in a millimetric manner by controlling the rotation of the screw 25 of the motor assembly 20; as mentioned above, actuation occurs both in one direction and in the other within the limits set by the stroke of the piston 21.

An important characteristic of the present invention is that the shock absorber assembly with adjustable height 1 comprises an accumulator tank assembly 27 in fluid connection with the cylinder 12 of the pusher 6 by means of a second pipe 17 fixed to the hydraulic connection 18 of the cylinder 12.

The accumulator tank assembly 27 in turn comprises at least one tank 28, at least one low-pressure accumulation chamber 29 which can consist of a device with a membrane 30 charged with gas or a device comprising an assembly with hydraulic fluid separator and mechanical spring (not shown) and at least one solenoid valve 31, with two positions, which controls the opening or closing of the hydraulic fluid inlet/outlet port. By opening the solenoid valve 31, the accumulator tank assembly 27 allows any pressure present in the pusher 6 to be quickly discharged, causing an immediate release of the spring preload of the shock absorber and consequently, a lowering of the vehicle.

The solenoid valve 31 is built to comprise a large section port with reduced pressure drops for the hydraulic fluid, so as to offer low resistance to the discharge of the hydraulic fluid which is in the cylinder 12 of the pusher 6, allowing for quick lowering of the vehicle.

In the event that the solenoid valve 31 is closed, the shock absorber assembly 1 operates in a conventional way since the hydraulic fluid present inside the circuit is entirely contained in the hydraulic line which includes the hydraulic pump 19, the pipe 16 and the cylinder 12 of the pusher 6.

In this way, it is possible to adjust the preload of the spring 3 and therefore the height of the vehicle under load with very precise positioning control.

When sudden lowering of the vehicle is necessary, starting from any height position of the vehicle, e.g. from any preload position of the spring 3 greater than the minimum preload condition of the spring 3, the solenoid valve 31 opens to allow a quick discharge of the hydraulic fluid from the cylinder 12 of the pusher assembly 6 towards the accumulator tank assembly 27, moving the supporting position P1 or P2 of the spring 3, so as to obtain a shortening of the length under load of the shock absorber 2.

At this point, that is, after carrying out the aforementioned fast discharge of hydraulic fluid, while still keeping the solenoid valve 31 open, the hydraulic pump 19 draws the hydraulic fluid from the tank assembly 27 returning to the position in which the piston 21 determines the minimum preload, i.e. the piston 21 is pulled back, drawing the hydraulic fluid from the tank assembly 27 towards the main circuit comprising the same hydraulic pump 19, the pipe 16 and the cylinder 12 of the pusher 6.

The emptying of the accumulator tank 28 is also helped by the pressure of the accumulation chamber 29, however the aforementioned pressure must have a not too high value because it must allow the complete discharge of the cylinder 12 of the pusher 6, normally the pressure of the accumulation chamber 29 is between 2 and 4 bars, i.e. 0.2-0.4 MPa.

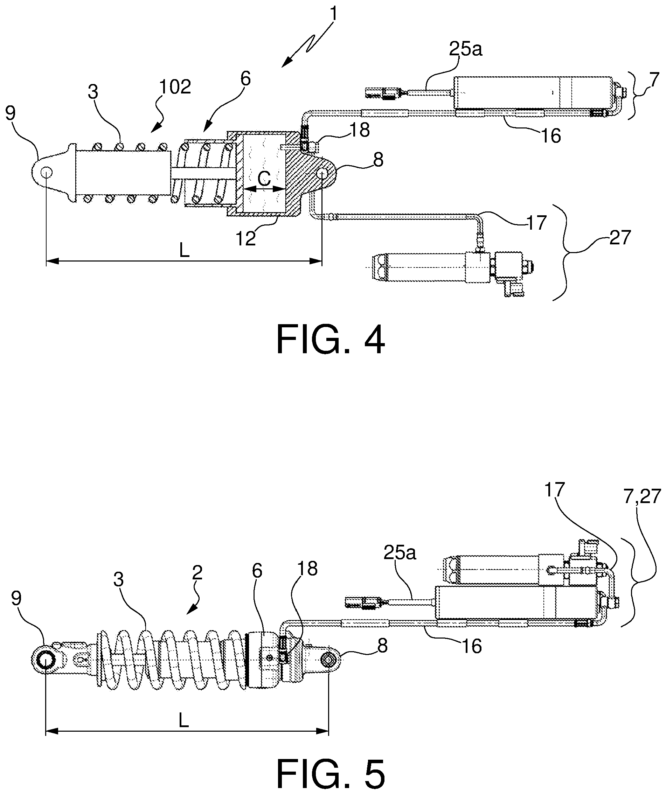

When the hydraulic pump 19 has returned to its minimum preload position, the solenoid valve 31 closes and the shock absorber assembly 1 is ready for another operating cycle. According to a second version of the present invention illustrated in figure 4, a shock absorber 102 is equipped with a pusher 6, comprising a hydraulic cylinder 12 which has a displacement stroke C, the pusher 6 being located at either end of the shock absorber 102 where the couplings 8, 9 of the shock absorber 102 to the vehicle suspension are located.

The other components of the shock absorber assembly with adjustable height 1 according to this version are the same as in the preceding version and will not be described further. The effect of introducing hydraulic fluid into - or emptying hydraulic fluid from - the hydraulic cylinder 12 is to adjust the stroke C of the cylinder 12 and consequently, directly the loaded length of the shock absorber 102, and not the preload of the spring 3 like in the preceding version.

The effect and operation of the shock absorber assembly with adjustable height 1 of this version are quite similar to those of the preceding version: by operating the pusher 6 the length of the shock absorber 102 increases, due to the stroke C available from the hydraulic cylinder 12 and consequently the height of the vehicle increases, even if the shock absorber 102 is normally under load and therefore, the shock absorber 102 has a shorter length than the nominal length L.

Naturally, by decreasing (or setting to zero) the stroke C available from the hydraulic cylinder 12, the height of the vehicle also decreases because the length under load of the shock absorber 102 is reduced.

According to a third version of the present invention illustrated in figure 5, the accumulator tank assembly 27 is integrated in the source 7 of pressurised hydraulic fluid, i.e. the accumulator tank assembly 27, the hydraulic pump 19 and the motor assembly 20 constitute a single unit, the second pipe 17 is much shorter in length and can also be eliminated altogether since the accumulator tank assembly 27 is located very close to the outlet of the hydraulic pump 19 or is integral with it.

In this third version of the present invention, the integration of the components 7, 27 allows some weight reduction and quicker installation of these components on the vehicle, while in the first version of the present invention, the separation of the components 7, 27 can help finding available space on the vehicle as these components can be placed in different positions.

Also for this third version, the other components, in particular the shock absorber 2, remain the same as those of the first version of the present invention; alternatively it is possible to use the shock absorber 102 of the second version described above.

It has thus been seen how the invention achieves the intended purposes.

Various modifications and variations can be made in the invention thus conceived, without departing from the scope of the invention, as defined by the claims.

## Claims

1. A shock absorber assembly with adjustable height (1) for two-wheeled motor vehicles and the like, or sidecars or lightweight vehicles with three or four wheels of the leaning type in corners, comprising a shock absorber (2, 102) with at least one spring (3), for example a helical spring coaxial to the shock absorber (2, 102), said shock absorber (2, 102) having a nominal length (L) and at least two couplings (8, 9) operatively connected to the suspension of the vehicle, said spring (3) having a first end (4) and a second end (5), at least one hydraulic fluid pusher (6) installed in series with the spring (3), said pusher (6) acting on either one of the two ends (4, 5) of the spring (3) or said pusher (6) acting on one of the two couplings (8, 9), a source (7) of hydraulic fluid under pressure in fluid connection with said pusher (6) and to actuate said pusher (6), an accumulator tank assembly (27) in fluid connection with said pusher (6), said accumulator tank assembly (27) in turn comprising at least one tank (28) and at least one solenoid valve (31) which controls the opening or closing of the inlet/outlet opening of the hydraulic fluid of said tank (28), said solenoid valve (31) being provided with a large-section port and reduced pressure drops for the hydraulic fluid, **characterised in that** said source (7) of pressurised hydraulic fluid in direct fluid connection without intermediate valves with said pusher (6), and **in that** said solenoid valve (31) is provided with the large-section port and reduced pressure drops for the hydraulic fluid, so as to allow quick discharge of the hydraulic fluid present in the pusher (6) towards said tank (28) and causing an immediate release of the preload of the spring (3) of the shock absorber (2) or an immediate reduction of the loaded length of the shock absorber (102) and therefore an immediate lowering of the vehicle.

2. A shock absorber assembly according to claim 1, wherein said accumulator tank assembly (27) comprises a device with a membrane (30) loaded with gas or a device comprising a set composed of a hydraulic fluid separator and a mechanical spring.

3. A shock absorber assembly according to claim 1 or 2, wherein said solenoid valve (31) comprises a port for the hydraulic fluid with a relatively large section, so as to offer low resistance to the discharge of the hydraulic fluid located in the pusher (6).

4. A shock absorber assembly according to any one of the preceding claims, wherein said source (7) of pressurised hydraulic fluid comprises a single-acting hydraulic pump (19) which is motor-driven via a motor assembly (20) of the electric type.

5. A shock absorber assembly according to the preceding claim, wherein said single-acting hydraulic pump (19) comprises a single-acting hydraulic cylinder which includes a piston (21) sliding in a sealed manner within said hydraulic cylinder and operated by said motor assembly (20) in a linear manner in both directions, within the stroke limits of the piston (21) itself.

6. A shock absorber assembly according to claim 4 or 5, wherein said motor assembly (20) comprises a rotary type electric motor (22), a reducer (23), for example a reducer with planetary gears, and a mechanism (24) to convert the rotary motion of the electric motor (22) into linear motion.

7. A shock absorber assembly according to the preceding claim, wherein said mechanism (24) to convert the rotary motion into linear motion comprises a mechanism formed by a screw (25) and a nut screw (26) in operative connection with each other.

8. A kit for upgrading or retrofitting an adjustable-height shock absorber comprising an adjustable-height shock absorber assembly (1) according to any one of the preceding claims.

9. A drive method of an adjustable-height shock absorber assembly, comprising the steps of:
providing a shock absorber assembly with adjustable height (1) for two-wheeled motor vehicles and the like, or sidecars or lightweight vehicles with three or four wheels of the leaning type in corners, according to any one of claims 1 to 7;
adjusting the preload of the spring (3) or the length of the shock absorber (102) and thus adjusting the height of the loaded vehicle with a precise positioning control;
**characterised in that** it comprises the steps of:
opening the solenoid valve (31) to allow for a fast discharge of the hydraulic fluid from the cylinder (12) of the pusher assembly (6) towards the accumulator tank assembly (27), if a sudden lowering of the vehicle becomes necessary starting from any height position of the vehicle;
maintaining the solenoid valve (31) open; and
recalling the hydraulic fluid from the tank assembly (27) towards the source (7) of pressurised hydraulic fluid and the pusher (6), bringing said source (7) of pressurised hydraulic fluid back to the minimum preload position of the spring (3) or minimum length of the shock absorber (102).

10. A drive method of an adjustable-height shock absorber assembly according to claim 9, wherein said steps are performed in the order described in claim 9 and comprising a subsequent closing step of the solenoid valve (31) to prepare said adjustable-height shock absorber assembly for a new cycle of operation.

11. A drive method of an adjustable-height shock absorber assembly according to claim 9 or 10, wherein said source (7) of pressurised hydraulic fluid comprises a single-acting hydraulic cylinder with a piston (21) sliding is a sealed manner within said cylinder and actuated in a linear manner in both directions within the stroke limits of the piston (21), by means of the electric motor assembly (20).

## Patentansprüche

1. Stoßdämpferbaugruppe mit verstellbarer Höhe (1) für zweirädrige Kraftfahrzeuge und dergleichen, oder Seitenwagen oder leichtgewichtige Fahrzeuge mit drei oder vier Rädern neigbaren Typs in Kurven, umfassend einen Stoßdämpfer (2, 102) mit mindestens einer Feder (3), zum Beispiel einer Spiralfeder, die koaxial zum Stoßdämpfer (2, 102) ist, wobei der besagte Stoßdämpfer (2, 102) eine Nennlänge (L) und mindestens zwei Kupplungen (8, 9) aufweist, die mit der Aufhängung des Fahrzeugs wirkverbunden sind, wobei die besagte Feder (3) ein erstes Ende (4) und ein zweites Ende (5) aufweist, wobei mindestens ein Hydraulikfluid-Stößel (6) in Reihe mit der Feder (3) installiert ist, wobei der besagte Stößel (6) auf entweder eines der beiden Enden (4, 5) der Feder (3) wirkt oder der besagte Stößel (6) auf eine der beiden Kupplungen (8, 9) wirkt, eine Quelle (7) für mit Druck beaufschlagtem Hydraulikfluid in Fluidverbindung mit dem besagten Stößel (6) und zum Betätigen des besagten Stößels (6), eine Speichertankbaugruppe (27) in Fluidverbindung mit dem besagten Stößel (6), wobei die besagte Speichertankbaugruppe (27) ihrerseits mindestens einen Tank (28) und mindestens ein Magnetventil (31), das das Öffnen oder Schließen der Einlass-/Auslassöffnung des Hydraulikfluids des besagten Tanks (28) steuert, umfasst, wobei das besagte Magnetventil (31) mit einem Anschluss mit großem Querschnitt und reduzierten Druckabfällen für das Hydraulikfluid versehen ist, **dadurch gekennzeichnet, dass** die besagte Quelle (7) für mit Druck beaufschlagtem Hydraulikfluid in direkter Fluidverbindung ohne Zwischenventile mit dem besagten Stößel (6) steht, und dadurch, dass das besagte Magnetventil (31) mit dem Anschluss mit großem Querschnitt und reduzierten Druckabfällen für das Hydraulikfluid versehen ist, um einen schnellen Ablass des in dem Stößel (6) vorhandenen Hydraulikfluids zu dem besagten Tank (28) hin zu ermöglichen und eine sofortige Freigabe der Vorspannung der Feder (3) des Stoßdämpfers (2) oder eine sofortige Reduzierung der belasteten Länge des Stoßdämpfers (102) und somit ein sofortiges Absenken des Fahrzeugs zu bewirken.

2. Stoßdämpferbaugruppe nach Anspruch 1, worin die besagte Speichertankbaugruppe (27) eine Vorrichtung mit einer Membran (30), die mit Gas geladen ist, oder eine Vorrichtung, umfassend einen Satz, bestehend aus einem Hydraulikfluid-Abscheider und einer mechanischen Feder, umfasst.

3. Stoßdämpferbaugruppe nach Anspruch 1 oder 2, worin das besagte Magnetventil (31) einen Anschluss für das Hydraulikfluid mit einem relativ großen Querschnitt umfasst, um dem Abfluss des im Stößel (6) befindlichen Hydraulikfluids einen geringen Widerstand entgegenzusetzen.

4. Stoßdämpferbaugruppe nach irgendeinem der vorangegangenen Ansprüche, worin die besagte Quelle (7) für mit Druck beaufschlagtem Hydraulikfluid eine einfachwirkende Hydraulikpumpe (19) umfasst, die über eine Motorbaugruppe (20) des elektrischen Typs motorisch angetrieben ist.

5. Stoßdämpferbaugruppe nach dem vorangegangenen Anspruch, worin die besagte einfachwirkende Hydraulikpumpe (19) einen einfachwirkenden Hydraulikzylinder umfasst, der einen Kolben (21) enthält, der in abgedichteter Weise innerhalb des besagten Hydraulikzylinders gleitet und von der besagten Motorbaugruppe (20) auf lineare Weise in beiden Richtungen innerhalb der Hubgrenzen des Kolbens (21) selbst betrieben wird.

6. Stoßdämpferbaugruppe nach Anspruch 4 oder 5, worin die besagte Motorbaugruppe (20) einen Drehtyp-Elektromotor (22), ein Untersetzungsgetriebe (23), zum Beispiel ein Untersetzungsgetriebe mit Planetengetriebe, und einen Mechanismus (24) zur Umwandlung der Drehbewegung des Elektromotors (22) in eine lineare Bewegung umfasst.

7. Stoßdämpferbaugruppe nach dem vorangegangenen Anspruch, worin der besagte Mechanismus (24) zur Umwandlung der Drehbewegung in eine lineare Bewegung einen Mechanismus umfasst, der durch eine Schraube (25) und eine Schraubenmutter (26) gebildet wird, die in Wirkverbindung miteinander stehen.

8. Bausatz zur Aufrüstung oder Nachrüstung eines höhenverstellbaren Stoßdämpfers, umfassend eine höhenverstellbare Stoßdämpferbaugruppe (1) nach irgendeinem der vorangegangenen Ansprüche.

9. Antriebsverfahren einer höhenverstellbaren Stoßdämpferbaugruppe, umfassend die Schritte des:
Bereitstellung einer Stoßdämpferbaugruppe mit verstellbarer Höhe (1) für zweirädrige Kraftfahrzeuge und dergleichen, oder Seitenwagen oder leichtgewichtige Fahrzeuge mit drei oder vier Rädern neigbaren Typs in Kurven, nach irgendeinem der Ansprüche 1 bis 7;
Einstellens der Vorspannung der Feder (3) oder der Länge des Stoßdämpfers (102) und somit des Einstellens der Höhe des beladenen Fahrzeugs mit einer präzisen Positionierungssteuerung;
**dadurch gekennzeichnet, dass** es die Schritte umfasst des:
Öffnens des Magnetventils (31), um einen schnellen Ablass des Hydraulikfluids aus dem Zylinder (12) der Stößelbaugruppe (6) zur Speichertankbaugruppe (27) hin zu ermöglichen, wenn ein plötzliches Absenken des Fahrzeugs von einer beliebigen Höhenposition des Fahrzeugs aus erforderlich wird;
Offenhaltens des Magnetventils (31); und
Rückrufens des Hydraulifluids aus der Tankbaugruppe (27) zur Quelle (7) für mit Druck beaufschlagtem Hydraulifluid und zum Stößel (6) hin, wodurch die besagte Quelle (7) des mit Druck beaufschlagtem Hydraulifluids in die Position der minimalen Vorspannung der Feder (3) oder der minimalen Länge des Stoßdämpfers (102) zurückgebracht wird.

10. Antriebsverfahren einer höhenverstellbaren Stoßdämpferbaugruppe nach Anspruch 9, worin die besagten Schritte in der in Anspruch 9 beschriebenen Reihenfolge durchgeführt werden und einen anschließenden Schließschritt des Magnetventils (31) umfassen, um die besagte höhenverstellbare Stoßdämpferbaugruppe für einen neuen Betriebszyklus vorzubereiten.

11. Antriebsverfahren einer höhenverstellbaren Stoßdämpferbaugruppe nach Anspruch 9 oder 10, worin die besagte Quelle (7) für mit Druck beaufschlagtem Hydraulikfluid einen einfachwirkenden Hydraulikzylinder mit einem Kolben (21), der in abgedichteter Weise in dem besagten Zylinder gleitet und auf lineare Weise in beide Richtungen innerhalb der Hubgrenzen des Kolbens (21) mittels der Elektromotorbaugruppe (20) betätigt wird, umfasst.

## Revendications

1. Ensemble amortisseur de hauteur réglable (1) pour des véhicules à moteur à deux roues et analogues, ou des sidecars ou des véhicules légers avec trois ou quatre roues du type incliné dans les virages, comprenant un amortisseur (2, 102) avec au moins un ressort (3), par exemple un ressort hélicoïdal coaxial à l'amortisseur (2, 102), ledit amortisseur (2, 102) ayant une longueur nominale (L) et au moins deux couplages (8, 9) raccordés opérationnellement à la suspension du véhicule, ledit ressort (3) ayant une première extrémité (4) et une deuxième extrémité (5), au moins un poussoir de fluide hydraulique (6) installé en série avec le ressort (3), ledit poussoir (6) agissant sur l'une des deux extrémités (4, 5) du ressort (3) ou ledit poussoir (6) agissant sur l'un des deux couplages (8, 9), une source (7) de fluide hydraulique sous pression en communication fluidique avec ledit poussoir (6) et pour actionner ledit poussoir (6), un ensemble réservoir accumulateur (27) en communication fluidique avec ledit poussoir (6), ledit ensemble réservoir accumulateur (27) comprenant à son tour au moins un réservoir (28) et au moins un robinet électromagnétique (31) qui commande l'ouverture ou la fermeture de l'ouverture d'entrée/sortie du fluide hydraulique dudit réservoir (28), ledit robinet électromagnétique (31) étant doté d'un orifice de grande section et de chutes de pression réduites pour le fluide hydraulique, **caractérisé en ce que** ladite source (7) de fluide hydraulique sous pression en communication fluidique directe sans valves intermédiaires avec ledit poussoir (6), et **en ce que** ledit robinet électromagnétique (31) est doté de l'orifice de grande section et de chutes de pression réduites pour le fluide hydraulique, afin de permettre la décharge rapide du fluide hydraulique présent dans le poussoir (6) vers ledit réservoir (28) et causant une libération immédiate de la précharge du ressort (3) de l'amortisseur (2) ou une réduction immédiate de la longueur chargée de l'amortisseur (102) et par conséquent un abaissement immédiat du véhicule.

2. Ensemble amortisseur selon la revendication 1, dans lequel ledit ensemble réservoir accumulateur (27) comprend un dispositif avec une membrane (30) chargée avec du gaz ou un dispositif comprenant un ensemble composé d'un séparateur de fluide hydraulique et d'un ressort mécanique.

3. Ensemble amortisseur selon la revendication 1 ou 2, dans lequel ledit robinet électromagnétique (31) comprend un orifice pour le fluide hydraulique avec une section relativement grande, afin d'offrir une résistance réduite à la décharge du fluide hydraulique situé dans le poussoir (6).

4. Ensemble amortisseur selon l'une quelconque des revendications précédentes, dans lequel ladite source (7) de fluide hydraulique sous pression comprend une pompe hydraulique à simple effet (19) qui est motorisée par un ensemble moteur (20) du type électrique.

5. Ensemble amortisseur selon la revendication précédente, dans lequel ladite pompe hydraulique à simple effet (19) comprend un vérin hydraulique à simple effet qui comprend un piston (21) coulissant de manière scellée à l'intérieur dudit vérin hydraulique et commandé par ledit ensemble moteur (20) de manière linéaire dans les deux directions, dans les limites de course dudit piston (21).

6. Ensemble amortisseur selon la revendication 4 ou 5, dans lequel ledit ensemble moteur (20) comprend un moteur électrique de type rotatif (22), un réducteur (23), par exemple un réducteur avec des engrenages planétaires, et un mécanisme (24) pour convertir le mouvement rotatif du moteur électrique (22) en mouvement linéaire.

7. Ensemble amortisseur selon la revendication précédente, dans lequel ledit mécanisme (24) pour convertir le mouvement rotatif en mouvement linéaire comprend un mécanisme formé par une vis (25) et une vis à écrou (26) raccordées opérationnellement l'une à l'autre.

8. Kit pour mettre à niveau ou moderniser un amortisseur à hauteur réglable comprenant un ensemble amortisseur à hauteur réglable (1) selon l'une quelconque des revendications précédentes.

9. Procédé d'entraînement d'un ensemble amortisseur à hauteur réglable, comprenant les étapes suivantes :
fourniture d'un ensemble amortisseur de hauteur réglable (1) pour véhicules à moteur à deux roues et analogues, ou sidecars ou véhicules légers avec trois ou quatre roues du type incliné dans les virages, selon l'une des revendications 1 à 7 ;
réglage de la précharge du ressort (3) ou de la longueur de l'amortisseur (102) et donc réglage de la hauteur du véhicule chargé avec un contrôle précis du positionnement ;
**caractérisé en ce qu'**il comprend les étapes de :
ouverture du robinet électromagnétique (31) pour permettre une décharge rapide du fluide hydraulique du vérin (12) de l'ensemble poussoir (6) vers l'ensemble réservoir accumulateur (27), si un abaissement soudain du véhicule devient nécessaire à partir d'une position en hauteur quelconque du véhicule ;
maintien du robinet électromagnétique (31) ouvert ; et rappel du fluide hydraulique depuis l'ensemble réservoir (27) vers la source (7) de fluide hydraulique sous pression et le poussoir (6), ramenant ladite source (7) de fluide hydraulique sous pression dans la position de précharge minimale du ressort (3) ou la longueur minimale de l'amortisseur (102).

10. Procédé d'entraînement d'un ensemble amortisseur à hauteur réglable selon la revendication 9, dans lequel lesdites étapes sont réalisées dans l'ordre décrit dans la revendication 9 et comprenant une étape successive de fermeture du robinet électromagnétique (31) pour préparer ledit ensemble amortisseur à hauteur réglable pour un nouveau cycle de fonctionnement.

11. Procédé d'entraînement d'un ensemble amortisseur à hauteur réglable selon la revendication 9 ou 10, dans lequel ladite source (7) de fluide hydraulique sous pression comprend un vérin hydraulique à simple effet avec un piston (21) coulissant de manière scellée à l'intérieur dudit vérin et actionné de manière linéaire dans les deux directions dans les limites de course du piston (21) au moyen de l'ensemble moteur électrique (20) .
